(19) Europäisches Patentamt
European Patent Office
Office européen des brevets

(11) EP 3 072 402 A1

(12) EUROPEAN PATENT APPLICATION

(43) Date of publication:
**28.09.2016 Bulletin 2016/39**

(21) Application number: **15161103.5**

(22) Date of filing: **26.03.2015**

(51) Int Cl.:
***A23L 5/42*** *(2016.01)*
***A23G 3/34*** *(2006.01)*
***A23G 3/54*** *(2006.01)*
***A23L 5/00*** *(2016.01)*
***A23G 1/48*** *(2006.01)*
***A23G 1/54*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **DSM IP Assets B.V.**
**6411 TE Heerlen (NL)**

(72) Inventors:
- **Grass, Hansjoerg**
  **4303 Kaiseraugst (CH)**
- **Hitzfeld, Andrea**
  **4303 Kaiseraugst (CH)**

(74) Representative: **Steck, Melanie**
**DSM Nutritional Products Ltd**
**Patent Department**
**Wurmisweg 576**
**4303 Kaiseraugst (CH)**

(54) **NEW RED COLOR FOR EDIBLE COATINGS**

(57) The present invention is directed to an edible coating comprising rhodoxanthin. This edible coating has a red value a* of at least 36 at the CIELAB color scale.

In embodiments of the present invention the edible coating further comprises β-carotene or 8'-apo-β-caroten-8'-al.

This edible coating is preferably used for coating confectionary such as chocolate lentils.

The present invention is also directed to precursors of such edible coatings such as sugar syrup and sugar-free alternatives, both comprising rhodoxanthin and optionally β-carotene or 8'-apo-β-caroten-8'-al.

EP 3 072 402 A1

## Description

The present invention is directed to red edible coatings which are e.g. used for confectionaries such as in particular chocolate products. The present invention is further directed to the precursors of such red edible coatings, i.e. the red sugar syrup or the red sugar-free syrup, as well as to panned confection and a process for its manufacture.

There is increasing interest in the food industry to replace synthetic materials for coloring foods with natural or nature identical colorants. Synthetic materials such as Allura Red AC, an azo dye, are suspected of causing attention deficit hyperactivity disorder (ADHD) in children. Furthermore such dyes can trigger allergies and allergy-like syndroms. Thus, due to the increased health consciousness of consumers there is a trend towards the use of natural dyes or nature identical colors. Especially wanted are colors that are also animal-free and kosher/halal.

A challenge in replacing synthetic colorants with natural colorants in the coating of hard panned confections has been in obtaining the stability of color characteristics provided by synthetic colorants and to match the color of the product the consumer is already used to. Thus, it is important that a consistent visual quality of the product is guaranteed.

Surprisingly it has been found that rhodoxanthin can be used to substitute Allura Red AC as red color in edible coatings.

Thus, the present invention is directed to an edible coating comprising rhodoxanthin. This edible coating can be applied to any desired edible product center.

### Edible product center

The edible product centers may be classified as follows: soft, hard, filled, extruded and compressed edible product centers.

Examples of soft edible product centers are deposited products based on Gum Arabic, gelatin, agar agar and/or pectin; toffee mass; deposited foam and fondant.

Examples of hard edible product centers are hard boiled candy, all types of nuts and recrystallized candy mass.

Examples of filled edible product centers are crusted liquid filling (coffee beans, easter eggs), soft candy with powder filling and soft candy with semi liquid filling.

Examples of extruded edible product centers are expanded cereals, original liquorice and fruit liquorice.

Examples of compressed edible product centers are all type of mint and fruit tablets, as well as drug delivery systems.

The edible product center may also be characterized according to the material it is made of. Therefore, in some embodiments, the edible product center may comprise a natural center, e.g., a nut (e.g. almonds, peanuts, hazelnuts), a nut paste, a fruit (e.g. a date), a dried fruit (e.g. dried apricots or raisins) or dried fruit pieces, or dried fruit paste, or spices (e.g. coriander, ginger, anisette seeds). The edible product center may also be sugar crystals.

Or, the edible product center may comprise a confection, e.g., a boiled sugar syrup, caramel, nougat, toffee, marshmellows, fudge, chocolate, or combinations of these.

Alternatively, the edible product center may comprise a grain-based item such as cereals (e.g. oat, wheat, corn, rice), e.g., a cookie, pretzel, biscuit, wafer, cracker, or other baked, crisped, or puffed material.

The edible product center may also be a tablet or a chewing gum. Examples of a tablet are a pharmaceutical or a (multi)vitamin tablet or a (multi)mineral tablet or a mixture thereof. The chewing gum can be in the form of balls, pillows or compressed tablets.

### Edible coating

The edible coating of the present invention which comprises rhodoxanthin has preferably a red value a* of at least 36 at the CIELAB Color scale, more preferably the red value a* is in the range of from 36 to 50 at the CIELAB Color scale, most preferably the red value a* is in the range of from 36 to 45 at the CIELAB Color scale.

In a preferred embodiment the edible coating further comprises β-carotene. An edible coating comprising rhodoxanthin and β-carotene has preferably a red value a* of at least 40 at the CIELAB Color scale, more preferably it has a red value a* in the range of from 40 to 50 at the CIELAB Color scale, most preferably it has a red value a* in the range of from 40 to 45 at the CIELAB Color scale. The reddish color shade h of such an edible coating comprising rhodoxanthin and β-carotene is preferably in the range of from 23 to 40 at the CIELAB Color scale, more preferably the reddish color shade h is in the range of from 25 to 35 at the CIELAB Color scale, most preferably the reddish color shade h is in the range of from 25 to 30 at the CIELAB Color scale.

Most preferred is an edible coating comprising rhodoxanthin and β-carotene with a red value a* in the range of from 40 to 50 (preferred 40 to 45) at the CIELAB Color scale and a reddish color shade h in the range of from 23 to 40 (preferred 25 to 35; more preferred 25 to 30) at the CIELAB Color scale. For such an edible coating preferably a cold-water soluble form of rhodoxanthin is used where the rhodoxanthin is embedded in a matrix of modified food starch and

where the β-carotene is used as an emulsion. More preferably the rhodoxanthin form as obtainable according to the process as described in example 1 and the β-carotene emulsion as obtainable according to the process as described in example 2 are used for such an edible coating having a red value a* in the range of from 40 to 50 (preferred 40 to 45) at the CIELAB Color scale and a reddish color shade h in the range of from 23 to 40 (preferred 25 to 35; more preferred 25 to 30) at the CIELAB Color scale.

When the edible coating comprises rhodoxanthin and β-carotene, the weight ratio of rhodoxanthin to β-carotene is preferably in the range of from 3:1 to 1:1, more preferably the weight ratio of rhodoxanthin to β-carotene is in the range of from 2.2:1 to 1.8:1, most preferably the weight ratio of rhodoxanthin to β-carotene is 2 to 1.

In another embodiment of the present invention the edible coating comprises rhodoxanthin and 8'-apo-β-caroten-8'-al (17-(2',6',6'-trimethylcyclo-hexen-1'-yl)-2,6,11,15-tetramethylheptadecaoctaene-(2,4,6,8,10,12,14,16)-al(1); called "apoal" in the following).

When the edible coating comprises rhodoxanthin and apoal, the weight ratio of rhodoxanthin to apoal is preferably in the range of from 2.5:1 to 1:1, more preferably the weight ratio of rhodoxanthin to apoal is 2:1.

In a preferred embodiment of the present invention the rhodoxanthin in the edible coating is in a water-soluble or water-dispersible form. Such a form or also called "formulation" comprises the rhodoxanthin embedded or encapsulated in a matrix of a protective colloid. Such a formulation will be explained in more detail below.

The β-carotene may also be added in a water-soluble or water-dispersible form. Such a form or also called "formulation" contains the β-carotene embedded or encapsulated in a matrix of a protective colloid. Such a formulation will be explained in more detail below.

The apoal may also be added in a water-soluble or water-dispersible form. Such a form or also called "formulation" contains the apoal embedded or encapsulated in a matrix of a protective colloid. Such a formulation will be explained in more detail below.

It is also possible to use a form which contains rhodoxanthin and β-carotene being together embedded or encapsulated in a matrix of a protective colloid. The same applies for an edible coating comprising rhodoxanthin and apoal. For such an edible coating it is also possible to use a form which contains rhodoxanthin and apoal being together embedded or encapsulated in a matrix of a protective colloid.

In such forms the carotenoids (rhodoxanthin, β-carotene and/or apoal) are protected from degradation and oxidation.

## Rhodoxanthin

Rhodoxanthin (compound of formula I) can be obtained from a natural source, by fermentation or by chemical synthesis. A natural source might be conifers, e.g. plants of Taxus baccata, or Aloe sp. (see e.g. Merzlyak et al., Photochem. Photobiol. Sci. 2005, 4, 333-340). Chemical syntheses are e.g. described in EP-A 077 439 and EP-A 085 763.

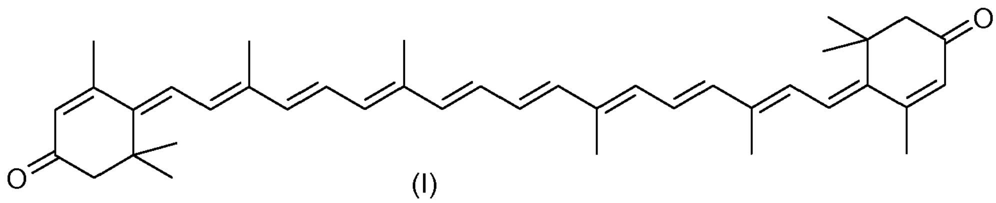

(I)

The term "rhodoxanthin" used herein encompasses the (all-E)-isomer as well as mono-, oligo- or poly-(Z)-isomers. A preferred isomer mixture contains (all-E)-rhodoxanthin, (6Z)-rhodoxanthin and (6Z,6'Z)-rhodoxanthin.

### Amount of rhodoxanthin in the edible coating

Preferably the amount of rhodoxanthin in the edible coating is in the range of from 2 ppm to 100 ppm, more preferably it is in the range of from 10 ppm to 80 ppm, most preferably it is in the range of from 20 ppm to 60 ppm, based on the total weight of the edible coating.

### Rhodoxanthin Form

In the formulation the rhodoxanthin is embedded in a matrix of a protective hydrocolloid. The protective hydrocolloid is preferably selected from the group consisting of modified food starches (esp. OSA starch) and mixtures thereof. Additionally water- and/or fat-soluble antioxidants may be present, preferably in an amount of from 0.5 to 5 weight-% in total, based on the total weight of the formulation. Furthermore, also an oil such as corn oil, sunflower oil, soybean oil,

safflower oil, rapeseed oil, peanut oil, palm oil, palm kernel oil, cotton seed oil, olive oil, coconut oil or MCT (middle chain triglycerides) may be present.

A preferred example of such water-soluble antioxidants is sodium ascorbate.

A preferred example of such fat-soluble antioxidants is dl-alpha-tocopherol.

Preferably the average particle size of the rhodoxanthin in such a formulation is in the range of from 250 to 320 nm measured with Delsa™ Nano S from Beckman Coulter (method: photon correlation spectroscopy).

The formulation according to the present invention comprises preferably 0.1 to 25 weight-%, more preferably 0.5 to 20.0 weight-%, even more preferably 1 to 15.0 weight-%, most preferably 5.0 to 10.0 weight-%, of rhodoxanthin, based on the total weight of the formulation.

The manufacture of such a formulation can be carried out e.g. as follows:

i) forming a solution of the rhodoxanthin in an organic solvent, optionally adding a fat-soluble antioxidant and/or an oil;
ii) dissolving the modified food starch and optionally the water-soluble antioxidant in water to obtain a matrix;
iii) emulsifying the solution obtained in step i) into the matrix obtained in step ii) to obtain an emulsion,
iv) removing the organic solvent from the emulsion obtained in step iii).

The emulsification in step iii) can be achieved by using a rotor-stator device or a high pressure homogenizer or both. Other devices known to the person skilled in the art may also be used.

The emulsion obtained in step iv) may be converted into a powder by any process known to the person skilled in the art such as spray-drying, powder-catch (= spraying the emulsion in a fluidized bed of a powder-catch agent such as starch (e.g. corn starch, potato starch, tapioca starch), calcium silicate, calcium phosphate or silicon dioxide or (micro)encapsulation.

In an embodiment of the present invention the rhodoxanthin formulation may consist only of rhodoxanthin, modified food starch and optionally water- and/or fat-soluble antioxidants.

<u>"Modified food starch"</u>

A modified food starch is a food starch that has been chemically modified by known methods to have a chemical structure which provides it with a hydrophilic and a lipophilic portion. Preferably the modified food starch has a long hydrocarbon chain as part of its structure (preferably C5-C18).

At least one modified food starch is preferably used to make a formulation of this invention, but it is possible to use a mixture of two or more different modified food starches in one formulation.

Starches are hydrophilic and therefore do not have emulsifying capacities. However, modified food starches are made from starches substituted by known chemical methods with hydrophobic moieties. For example starch may be treated with cyclic dicarboxylic acid anhydrides such as succinic anhydrides, substituted with a hydrocarbon chain (see O. B. Wurzburg (editor), "Modified Starches: Properties and Uses, CRC Press, Inc. Boca Raton, Florida, 1986, and subsequent editions). A particularly preferred modified food starch of this invention has the following formula (I)

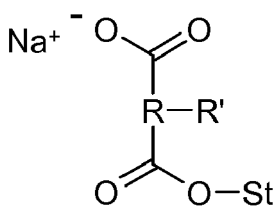

(I)

wherein St is a starch, R is an alkylene radical and R' is a hydrophobic group. Preferably R is a lower alkylene radical such as dimethylene or trimethylene. R' may be an alkyl or alkenyl group, preferably having 5 to 18 carbon atoms. A preferred compound of formula (I) is an "OSA-starch" (starch sodium octenyl succinate). The degree/extent of substitution, i.e. the number of esterified hydroxyl groups to the number of free non-esterified hydroxyl groups usually varies in a range of from 0.1% to 10%, preferably in a range of from 0.5% to 4%, more preferably in a range of from 3% to 4%.

The term "OSA-starch" denotes any starch (from any natural source such as corn, waxy maize, waxy corn, wheat, tapioca and potato or synthesized) that was treated with octenyl succinic anhydride (OSA). The degree/extent of substitution, i.e. the number of hydroxyl groups esterified with OSA to the number of free non-esterified hydroxyl groups usually varies in a range of from 0.1% to 10%, preferably in a range of from 0.5% to 4%, more preferably in a range of from 3% to 4%. OSA-starches are also known under the expression "modified food starch".

The term "OSA-starches" encompasses also such starches that are commercially available e.g. from National Starch/Ingredion under the tradenames HiCap 100, Capsul, Capsul HS, Purity Gum 2000, Clear Gum Co03, UNI-PURE,

HYLON VII; from National Starch/Ingredion and Roquette Frères, respectively; from CereStar under the tradename C*EmCap or from Tate & Lyle.

In an embodiment of the present invention a commercially available modified food starch such as e.g. HiCap 100 (from National Starch/Ingredion) and ClearGum Co03 (from Roquette Frères) is used.

Especially preferred is the form "Rhodoxanthin 5% CWS/S" ("cold water soluble/starch") as described in detail in example 1. The average particle size is ≤ 320 nm measured with a Delsa™ Nano S from Beckman Coulter. The Delsa Nano S uses photon correlation spectroscopy (PCS), which determines particle size by measuring the rate of fluctuations in laser light intensity scattered by particles as they diffuse through a fluid, for size analysis measurements.

## β-Carotene

β-carotene may be synthetically manufactured or isolated from natural sources.

### Amount of β-carotene in the edible coating

Preferably the amount of β-carotene in the edible coating is in the range of from 2 ppm to 100 ppm, more preferably it is in the range of from 10 ppm to 80 ppm, most preferably it is in the range of from 15 ppm to 45 ppm, based on the total weight of the edible coating.

### β-carotene form

In the formulation the β-carotene is embedded in a matrix of a protective hydrocolloid. The amount of β-carotene in the formulation is usually in the range of from 1 to 10 weight-%, based on the total weight of the formulation. The protective hydrocolloid may be selected from the group consisting of modified food starch (esp. OSA starch) and proteins (of animal or plant origin) such as gelatin. Additionally water- and/or fat-soluble antioxidants may be present, preferably in an amount of from 0.5 to 5 weight-% in total, based on the total amount of the formulation.

A preferred example of such water-soluble antioxidants is sodium ascorbate.

A preferred example of such fat-soluble antioxidants is dl-alpha-tocopherol.

Especially preferred is a dispersion where the β-carotene is embedded in a matrix of modified food starch, whereby glycerine or a glucose syrup is added. An especially preferred example of such a form is described in example 2.

When glycerine is present, the amounts of water and glycerine are preferably both in the range of from 30 to 40 weight-%, based on the total weight of the dispersion, and the amount of modified food starch is preferably in the range of from 10 to 25 weight-%, based on the total weight of the dispersion, whereby the amounts of β-carotene, modified food starch, glycerine, water and, if present, water- and/or fat-soluble antioxidants all sum up to 100 weight-%.

When a glucose syrup is present, the amount of the glucose syrup is preferably in the range of from 2 to 65 weight-%, the amount of modified food starch is preferably in the range of from 15 to 45 weight-%, and the amount of water is preferably in the range of from 5 to 50 weight-%, all amounts being based on the total weight of the dispersion, whereby the amounts of β-carotene, modified food starch, glucose syrup, water and, if present, water- and/or fat-soluble antioxidants all sum up to 100 weight-%.

The average particle size D (v,0.5) of the β-carotene in such form is preferably in the range of from 450 to 550 nm, more preferably around 500 nm measured by Laser Diffraction; Malvern Mastersizer S, Fraunhofer volume distribution.

## Apoal

### Amount of apoal in the edible coating

Preferably the amount of apoal in the edible coating is in the range of from 5 ppm to 50 ppm, more preferably it is in the range of from 10 ppm to 30 ppm, most preferably it is in the range of from 15 ppm to 25 ppm, based on the total weight of the edible coating.

### Apoal form

Preferably a clear liquid formulation of apoal is used which comprises:

a) 0.1 to 10 weight-% (preferably 0.5 to 5 weight-%, more preferably 0.5 to 3.0 weight-%, most preferably 1.0 to 3.0 weight-%) of apoal, and

b) 20 to 60 weight-% (preferably 30 to 50 weight-%) of at least one modified food starch as defined above, and

c) 0.5 to 60 weight-% (preferably 0.5 to 30 weight-%, more preferably 0.5 to 20 weight-%, even more preferably 0.5 to 10 weight-%, most preferably 1.0 to 10 weight-%) of at least one saccharide, and
d) 35 to 75 weight-% (preferably 45 to 65 weight-%) of water,

all amounts based on the total weight of the liquid formulation,
whereby all amounts add up to 100 weight-%.

Hereby the apoal is embedded in a matrix of the modified food starch/es and the saccharide/s.

The term "saccharide" (compound c) of the preferred apoal form) encompasses mono-, di-, oligo- and polysaccharides, as well as any mixtures thereof.

Examples of monosaccharides are fructose, glucose (= dextrose), mannose, galactose, sorbose, as well as any mixtures thereof.

Preferred monosaccharides are glucose and fructose, as well as any mixture thereof.

The term "glucose" in the context of the present invention does not only mean the pure substance, but also a glucose syrup with a DE $\geq$ 90. This also applies for the other monosaccharides.

The term "dextrose equivalent" (DE) denotes the degree of hydrolysis and is a measure of the amount of reducing sugar calculated as D-glucose based on dry weight; the scale is based on native starch having a DE close to 0 and glucose having a DE of 100.

Examples of disaccharides are saccharose, isomaltose, lactose, maltose and nigerose, as well as any mixture thereof.

An example of an oligosaccharide is maltodextrin.

An example of a polysaccharide is dextrin.

An example of a mixture of mono- and disaccharides is invert sugar (glucose + fructose + saccharose).

Mixtures of mono- and polysaccharides are e.g. commercially available under the tradenames Glucidex IT 47 (from Roquette Frères), Dextrose Monohydrate ST (from Roquette Frères), Sirodex 331 (from Tate & Lyle) and Glucamyl F 452 (from Tate & Lyle).

In one embodiment of the apoal form the saccharide c) is a mixture of a glucose syrup with a DE of 95 and a glucose syrup with a DE of 47 in a weight ratio of 1 : 1.

Such mixtures of glucose syrups are preferred examples of the saccharide c).

Preferably the average particle size of the inner phase of the apoal form is in the range of 100 to 250 nm, preferably in the range of 110 to 210 nm, more preferably in the range of 130 to 190 nm, measured by photon correlation spectroscopy.

An especially preferred example of such a form is "Apocarotenal 2.5 CC" (crystal clear) as commercially available by DSM Nutritional Products AG, Kaiseraugst, Switzerland and described in detail in WO 2013/144221.

The edible coating according to the present invention can be one being based on sugar but also one being based on sugar-free alternatives.

**Sugar-based edible coatings.**

Preferably the sugar in the edible coating is selected from the group consisting of monosaccharides and disaccharides and mixtures thereof.

Preferred examples of mono- and disaccharides are saccharose, glucose, fructose, maltose and mixtures thereof.

The sugar syrup has preferably a Brix value in the range of from 65 to 75, more preferably it has a Brix value in the range of from 70 to 75.

When the edible coating is a hard panned coating, the sugar syrup may also include other components conventionally used in hard panned coatings. Many such components are known in the art and include, but are not limited to, sugar alcohols, high intensity sweeteners, natural polymers, flavors, flavor modifiers, gums, vitamins, minerals, nutraceuticals, or combinations of these. For example, a gum may be included in a sugar syrup to act as a plasticizer in the crystallized sugar coating.

**Sugar-free alternatives**

Sugar-free edible coatings are also part of the present invention. Here polyols such as maltitol, xylitol, mannitol, sorbitol, isomalt, palatinose and mixtures thereof are used instead of sugar.

**Product**

The present invention is directed to the edible coating as described above and claimed in the claims.

Furthermore, the present invention is also directed to a sugar syrup comprising rhodoxanthin, wherein the sugar is selected from the group consisting of monosaccharides and disaccharides and mixtures thereof. Preferably the sugar is selected from the group consisting of saccharose, glucose, fructose, maltose and mixtures thereof.

In another embodiment the sugar syrup further comprises β-carotene.

The same preferences as given above for the edible coating such as e.g. amount of rhodoxanthin, amount of β-carotene, weight-ratio of both to each other etc. also apply for the sugar syrup.

In a further embodiment the sugar syrup further comprises apoal instead of β-carotene.

The same preferences as given above for the edible coating such as e.g. amount of rhodoxanthin, amount of apoal, weight-ratio of both to each other etc. also apply for the sugar syrup.

The present invention is also directed to a sugar-free syrup comprising rhodoxanthin and a polyol, wherein the polyol is selected from the group consisting of maltitol, xylitol, mannitol, sorbitol, isomalt, palatinose and mixtures thereof.

In another embodiment such a sugar-free syrup further comprises β-carotene.

The same preferences as given above for the edible coating such as e.g. amount of rhodoxanthin, amount of β-carotene, weight-ratio of both to each other etc. also apply for the sugar-free syrup.

In a further embodiment the sugar-free syrup further comprises apoal instead of β-carotene.

The same preferences as given above for the edible coating such as e.g. amount of rhodoxanthin, amount of apoal, weight-ratio of both to each other etc. also apply for the sugar syrup.

The invention is also directed to a panned confection comprising:

a) an edible product center as described above, and
b) and edible coating with the preferences as described above.

An especially preferred embodiment of the present invention is sugar coated chocolate confectionary whereby a mixture of rhodoxanthin and β-carotene results in sugar coated candies/chocolate lentils with a reddish color shade h in the range of from 23 to 40 (preferred 25 to 35; more preferred 25 to 30) at the CIELAB Color scale and preferably also a red value a* of at least 40 (preferred in the range of from 40 to 50; more preferred in the range of from 40 to 45) at the CIELAB Color scale.

Such a sugar coated chocolate confectionary with a color shade h in the range of from 23 to 40 at the CIELAB Color scale comprising rhodoxanthin and β-carotene in the edible coating can be prepared according to a process comprising the following steps:

a) applying a minimum of 70 coating layers of sugar syrup on the confectionary;
b) optionally applying 10 layers of titanium dioxide;
c) applying 10 to 30 colored coating layers whereby the colored coating layers comprise rhodoxanthin and β-carotene.

## Processes of the present invention

Prior to the application of one or more sugar syrup layers, the surface of the edible product center may be prepared according to known techniques in the art such as gumming, isolating, and stabilizing.

For example, in gumming, layers of a high glucose content syrup containing a gum, gelatin, starch, or dextrin may be applied directly to the edible center alternately with a fine crystalline sugar to fill irregularities and smooth ridges. The smoother surface that is obtained may facilitate even coating and adherence of the later applied sugar syrup layers.

Isolating is a process of creating a barrier to lipid, water, or natural sugar migration between the edible center and the sugar syrup layers, and may be effected by applying a film containing gelatin or gum to the center in a process similar to gumming. Stabilizing may be required to strengthen a fragile edible center for subsequent hard pan coating with sugar syrups. A cookie center, for example, may be prevented from crumbling during hard pan coating by first being coated with a melted fat, then isolated with a gum-containing film. Preparation of the surface of the edible core may also be completed with one or more applications of a saccharose sugar syrup.

In some embodiments, sugar syrups may be applied as coating layers directly to the surface of an edible product center. In other embodiments, sugar syrups may be applied as coating layers to a prepared surface of an edible product center, wherein the surface has been prepared according to a known technique including, but not limited to, gumming, isolating, and stabilizing. In still other embodiments, sugar syrups may be applied as coating layers to a crystallized sugar syrup layer overlying any number of coating layers overlying the edible product center. As the phrase that follows in quotation marks is used herein, the application of a sugar syrup as a coating layer "to an edible product center" does not necessarily denote that the sugar syrup is applied directly to the edible product center.

Rather, a sugar syrup that is applied as a coating layer "to an edible product center" may be applied directly to the surface of the edible product center, or to a prepared surface of an edible product center, or to a crystallized sugar syrup layer overlying any number of coating layers overlying the edible product center, within the meaning of the phrase.

In another aspect, the present invention is directed to a method of hard pan coating an edible product center comprising applying a plurality of coating layers to the edible product center, wherein applying comprises applying a coating layer comprising a sugar and rhodoxanthin to the edible product center.

The red rhodoxanthin containing colored coating layers may be applied in 10 to 30 colored coating layers. Preferably a minimum of 70 coating layers of sugar syrups and 10 layers of titanium dioxide have been applied before the red rhodoxanthin containing colored coating layers are applied. That means that preferably a total amount of 100 to 150 coating layers is applied.

The desired edible product center is coated with the desired sugar syrups as coating layers, in the desired number of layers for each as described above, and according to processes and techniques generally known in the art. Generally speaking, the process for manufacturing hard panned confections comprises the deposition of a plurality of coating layers of the sugar syrups by a series of syrup application and drying cycles carried out, for example, in a rotating pan.

Panning and some coating processes are performed in a rotating drum or "pan". Such processes may typically be driven by the equipment utilized to perform them, which are e.g. commercially available from Friedhelm Stechel GmbH (Germany), from Wolf Spezialmaschinen (Germany) and from Driam Anlagenbau Gmbh (Germany), Dumoulin (France).

In a hard panning process, multiple applications of a highly concentrated sugar syrup are used to build up the uncolored portion of a sugar coating on an edible product center. This is followed by multiple applications of a concentrated sugar syrup containing rhodoxanthin and preferably also β-carotene or apoal. The hard panning process comprises the repetitive application of thin layers of a coating solution or composition onto an intermixed mass of centers, while mixing the mass of centers, and the drying of each layer of coating solution or composition during which the sugar in the coating crystallizes between the applications of layers. However, in each process, coating material is built up on the center to form the desired coating.

As the coating is to be colored red, rhodoxanthin is added to the coating solution in the later stages of the coating process. For a hard panned confectionery, following the application of a number of layers of the uncolored sugar syrup to build up the sugar coating, a number of applications of a sugar syrup comprising rhodoxanthin are applied to provide the color coat. The color coat requires 10 to 30 applications of the colored coating solution to achieve the desired color.

The coating layers of the hard panned confection may be applied to any desired edible product center as described above.

In another aspect, the present invention is directed to a method of soft pan coating an edible product center as described above.

<u>Soft pan coating</u>

Soft pan coating or also called "soft panning" involves applying a syrup to the edible product centers in the same way as for hard panning; however, the soft panning syrup is intended not to crystalize. Therefore, either glucose or a mixture of sucrose and glucose is used as soft panning syrup. The centers are wetted with the syrup just sufficiently to coat them. Instead of evaporating the water as in hard panning, powdered sugar or caster sugar is added during the tumble which is dissolving in the water of the applied syrup. The amount of sugar that is added needs to be just sufficient to coat the centers but has not to be in excess. Soft panning is carried out without heating and without the use of drying air. Soft panning is a much more rapid process then hard panning and can be applied to a soft center that will be unsuitable for hard panning. Soft panning puts on thicker layers than hard panning and consequently the shape of the centers will be lost. A product that has been soft panned can be finished by dusting with milled sugar followed by a number of hard panned coats. Typical soft panned products are jelly beans and dolly mixture components. Typically 3 to 10 layers are added in soft panning.

**<u>Use according to the present invention</u>**

The present invention is also directed to the use of rhodoxanthin, optionally in combination with β-carotene or apoal, for coloring sugar syrups, sugar-free syrups and edible coatings red, especially with the red value a* and/or the reddish color shade h at the CIELAB color scale as given above.

The present invention is especially directed to the use of rhodoxanthin and β-carotene to impart a reddish color shade h in the range of from 25 to 30 at the CIELAB Color scale and a red value a* in the range of from 40 to 45 at the CIELAB color scale to sugar coated confectionary, i.e. confectionary with an edible coating according to the present invention wherein the edible coating comprises sugar and the confectionary is preferably chocolate lentils.

Color measurement

Color (lightness, Chroma, and hue) of the hard sugar coated confectionary was determined with a HunterLab Ultra Scan Pro spectrocolorimeter (Hunter Associates Laboratory, Reston, VA,USA) and expressed on basis of the CIELAB colour scale. The mode used was RSIN which stands for Reflectance - Specular Included. The small area view (SAV) with a diameter of 4.826 mm (0.190 inch) was chosen. Color measurements are carried out after CIE guidelines (Commission International d'Eclairage). Values can be expressed as planar coordinates as L*, a*, b* with L* being the measuring values for lightness, with a* being the value on the red-green axes and b* being the value on the yellow-blue axes.

The Chroma (C*) sometimes called saturation describes the vividness or dullness of a color which can be calculated as followed:

$$C^* = \sqrt{(a^{*2} + b^{*2})}$$

The angle called hue (h) describes how we perceive an object's color and can be calculated as followed:

$$h = \tan(b/a)^{(-1)}$$

Instruments settings:

- Color scale is the CIE L*a*b*/L*C*h
- Light source definition: D65 daylight equivalent
- Geometry: Diffuse/8°
- Wavelength: scan 350-1050 nm
- Sample measurement area diameter: 4.826 mm
- Calibration mode: Reflection/ Specular-included

The invention is now further illustrated in the following non-limiting examples.

Examples

Example 1: Manufacture of rhodoxanthin 5% CWS/S

10 g of crystalline rhodoxanthin, 1.3 g of dl-α-tocopherol and 4.6 g of corn oil are dissolved in an appropriate solvent (oil phase). This solution is added under stirring to a solution of 100.8 g of an OSA starch and 240 g water at 50-60°C.This pre-emulsion is homogenized with a rotor-stator-homogenizer for 20 minutes. Eventually the emulsion is homogenized with a high pressure homogenizer. In the next step the remaining solvent is removed by distillation and the solvent-free emulsion is dried by a standard powder catch process. 156 g of beadlets are obtained with a rhodoxanthin content of 4.5%.

The color intensity E1 /1 is the absorbance of a 1% solution and a thickness of 1 cm and is calculated as follows: E1/1 = (Amax-A650)*dilution factor / (weight of sample * content of product form in %).

"(Amax-A650)" means the value you get when you substract the Adsorption value measured at 650 nm ("A650") wavelength from the value ("Amax") that was measured at the maximum Adsorption in the UV-Spectrophotometer.
"*" means "multiplied with".
"dilution factor" = the factor by which the solution has been diluted.
"weight of sample" = the amount/weight of the formulation that was used in [g]
"content of product form in %" = "the amount of rhodoxanthin in the beadlet in %" which is 4.5 in the present case.

$$E1/1_{corr.} \text{ in } H_2O\ (\lambda\ max) = 1604\ (481\ nm)$$

Example 2: Manufacture of a β-carotene dispersion

100 g of crystalline β-carotene and 2 g of α-tocopherol are added into a solution of 353 g of glycerine, 200 g of modified food starch and 345 g of water. The suspension is pumped in circulation through an agitated ball mill. The milling process is stopped as soon as the desired average particle size D(v,0.5) of the milled β-carotene crystals of approx. 450-550 nm was achieved (measured by Laser Diffraction; Malvern Mastersizer S, Fraunhofer volume distribution).

Example 3: Coating of chocolate lentil cores with a mixture of rhodoxanthin and β-carotene

A rhodoxanthin stock solution is prepared by mixing 4 g of rhodoxanthin 5% CWS/S prepared according to example 1 and 11 g of demineralized water and, thus, dispersing the rhodoxanthin in water. Afterwards 1 g of the β-carotene dispersion prepared according to example 2 and 0.1 g of ascorbic acid are added to the stock solution resulting in the so-called "carotenoid stock solution".
The sugar syrup is produced by adding 600 g of sugar, 400 g of water (demineralized) and 10 g of glucose syrup together and heating the mixture up to 105°C which results in a sugar syrup of 72° Brix.

| Ingredients of the sugar syrup | Amount (g) |
|---|---|
| Raw cane sugar | 600 |
| Water (demineralized) | 400 |
| Glucose Syrup | 10 |

12.5 g of this carotenoid stock solution is mixed with 550 g of the sugar solution (65-75 Brix, preferred 70-75 Brix) at a temperature of 65°C under stirring resulting in a colored syrup.
Chocolate lentils are pre-coated with a pure sugar solution thus providing chocolate lentils with a white center. After this pre-coating a white pigment like titanium dioxide may be added to the sugar syrup and the chocolate lentils may be coated with 10-20 layers of this white sugar syrup before they are coated with the colored layers.
A small amount of colored sugar syrup is added to the chocolate lentils and evenly distributed in a panning drum at a moderate speed. Afterwards the thus colored lentils are dried with cold air (15 -25°C, relative humidity in the range 30-50%) at moderate speed resulting in one layer. These steps are repeated (usually 20-50 times) until the desired color intensity is achieved.
The hard panned candy has a smooth surface aspect which is enhanced by final glazing layers. The color values of these colored chocolate lentils were then measured and are summarized in the table below.

| CIE L*a*b* | Average L* | Average a* | Average b* | Average C* | Average h |
|---|---|---|---|---|---|
| **Commercial Reference (carmine and curcumine)** | **46.26** | **42.76** | **20.65** | **47.48** | **25.78** |
| **Allura Red AC (Example 8)** | **44.45** | **41.59** | **20.93** | **46.56** | **26.72** |
| **Example 3 (23 layers)** | **50.25** | **41.31** | **21.73** | **46.68** | **27.75** |

A color match with the desired reddish color shade h in the range of from 25 to 30 at the CIELAB Color scale was accomplished by using a mixture of 38 ppm of the rhodoxanthin form prepared according to example 1 with 19 ppm of the β-carotene form prepared according to example 2 and 23 ppm of ascorbic acid at 25°C. Therefore 23 layers of colored sugar syrup containing rhodoxanthin 5% CWS/S, the aqueous liquid β -carotene form and ascorbic acid were applied to white chocolate lentils cores.
The edible coating according to example 3 has the advantage of being animal-free compared to a coating comprising carmine.

Example 4

Example 3 was repeated, but instead of 23 layers of carotenoid colored sugar solution 18 layers of carotenoid colored sugar solution were applied.

Example 5

Example 3 was repeated, but instead of 23 layers of carotenoid colored sugar solution 13 layers of carotenoid colored sugar solution were applied.

The results of example 4 and 5 - in comparison to example 3 - are summarized in the table below.

| CIE L*a*b* | Average L* | Average a* | Average b* | Average C* | Average h |
|---|---|---|---|---|---|
| **13 layers (example 5)** | 55.8 | 43.38 | 28.61 | 51.96 | 33.41 |
| **18 layers (example 4)** | 53.01 | 42.13 | 23.64 | 48.31 | 29.3 |
| **23 layers (example 3)** | 50.25 | 41.31 | 21.73 | 46.68 | 27.75 |

Example 6: Coating of chocolate lentil cores with rhodoxanthin only

Example 3 was repeated but the following stock solution was used:

12 g of rhodoxanthin 5% CWS/S prepared according to example 1 and 100 g of demineralized water are mixed and, thus, the rhodoxanthin dispersed in water.

Thus the stock solution did not contain β-carotene. Afterwards 0.1 g of ascorbic acid are added to the stock solution resulting in the so-called "carotenoid stock solution". The results are summarized in the following table.

| CIE L*a*b* | Average L*: | Average a*: | Average b*: | Average C*: | Average h: |
|---|---|---|---|---|---|
| **Example 6** | 49.61 | 36.51 | 18.25 | 40.82 | 26.56 |

Example 7: Coating of chocolate lentil cores with β-carotene alone

Example 6 was repeated, but the following stock solution was used:

A β-carotene stock solution is prepared by mixing 25 g of the β-carotene dispersion according to example 2 into 5,3 g of demineralized water. Thus, the stock solution did not contain rhodoxanthin.

The results are summarized in the following table.

| CIE L*a*b* | Average L*: | Average a*: | Average b*: | Average C*: | Average h: |
|---|---|---|---|---|---|
| β-carotene | 63.64 | 47 | 43.63 | 64.14 | 42.86 |

Example 8: Coating of chocolate lentil cores with Allura Red AC

Example 6 was repeated, but the following stock solution was used:

A colored stock solution is prepared by mixing 4 g of Allura Red AC into 16 g of demineralized water.

The results are summarized in the following table.

| CIE L*a*b* | Average L*: | Average a*: | Average b*: | Average C*: | Average h: |
|---|---|---|---|---|---|
| Allura Red AC | 43.16 | 41.43 | 21.75 | 46.79 | 27.7 |

**Example 9: Coasting of chocolate lentil cores with a mixture of rhodoxanthin and apoal**

A rhodoxanthin stock solution is prepared by mixing 5 g of rhodoxanthin 5% CWS/S and 20 g of demineralized water. After dissolution 9 g of "Apocarotenal 2,5% CC" and 0.01 g of ascorbic acid are added to the stock solution resulting in the so-called "carotenoid stock solution".

The results are summarized in the following table.

| CIELAB Scale | L* | a* | b* | C* | h |
|---|---|---|---|---|---|
| Rhodoxanthin + Apocarotenal 2,5% CC | 54.43 | 38.58 | 28.17 | 47.77 | 36.16 |

## Claims

1. An edible coating comprising rhodoxanthin.

2. The edible coating according to claim 1, wherein the edible coating has a red value a* of at least 36 at the CIELAB color scale, preferably a red value a* in the range of from 36 to 50 at the CIELAB color scale, more preferably a red value a* in the range of from 36 to 45 at the CIELAB color scale.

3. The edible coating according to claim 1 further comprising β-carotene.

4. The edible coating according to claim 3, wherein the edible coating has a red value a* of at least 40 at the CIELAB color scale, preferably a red value a* in the range of from 40 to 50 at the CIELAB color scale, more preferably a red value a* in the range of from 40 to 45 at the CIELAB color scale.

5. The edible coating according to claim 3 or 4, wherein the edible coating has a reddish color shade h in the range of from 23 to 40 at the CIELAB color scale, preferably a reddish color shade h in the range of from 25 to 35 at the CIELAB color scale, more preferably a reddish color shade h in the range of from 25 to 30 at the CIELAB color scale.

6. The edible coating according to claim 1 and/or 2 further comprising 8'-apo-β-caroten-8'-al.

7. The edible coating according to any one or more of the preceding claims, wherein the amount of rhodoxanthin is in the range of from 2 ppm to 100 ppm, preferably in the range of from 10 to 80 ppm, more preferably in the range of from 20 to 60 ppm, based on the total weight of the edible coating.

8. The edible coating according to any one or more of claims 3 to 5, wherein the amount of β-carotene is in the range of from 2 ppm to 100 ppm, preferably in the range of from 10 to 80 ppm, more preferably in the range of from 15 to 45 ppm, based on the total weight of the edible coating.

9. A sugar syrup comprising rhodoxanthin.

10. The sugar syrup according to claim 9, wherein the sugar is selected from the group consisting of saccharose, glucose, fructose, maltose and mixtures thereof.

11. The sugar syrup according to claim 9 and/or 10 further comprising β-carotene or 8'-apo-β-caroten-8'-al.

12. A sugar-free syrup comprising rhodoxanthin and a polyol.

13. The sugar-free syrup according to claim 12, wherein the polyol is selected from the group consisting of maltitol, xylitol, mannitol, sorbitol, isomalt, palatinose and mixtures thereof.

14. The sugar syrup according to claim 12 and/or 13 further comprising β-carotene or 8'-apo-β-caroten-8'-al.

15. A panned confection comprising:

    a) an edible product center, and
    b) an edible coating according to any one or more of claims 1 to 8.

Europäisches Patentamt
European Patent Office
Office européen des brevets

# EUROPEAN SEARCH REPORT

Application Number
EP 15 16 1103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/113076 A1 (KLINGENBERG ANDREAS [DE]) 15 May 2008 (2008-05-15) * paragraphs [0003], [0004], [0015], [0016], [0049]; claims 1-5,26; example 1 * | 9-15 | INV. A23L1/275 A23G3/34 A23G3/54 A23L1/00 A23G1/48 A23G1/54 |
| X<br>A | US 2013/089644 A1 (KLINGENBERG ANDREAS [DE] ET AL) 11 April 2013 (2013-04-11) * paragraphs [0012], [0023], [0034]; claims 1,5,9,14,26 * | 12-14<br>1-11,15 | |
| X<br>A | DE 20 2006 003132 U1 (SENSIENT FOOD COLORS GERMANY G [DE]) 12 July 2007 (2007-07-12) * claims 1,2,12,17; example 1 * | 9-15<br>1-8 | |
| E | WO 2015/044212 A1 (DSM IP ASSETS BV [NL]) 2 April 2015 (2015-04-02) * claims 1,2,15; examples 4,5 * | 1,2,4,5, 7-10,15 | |
| E | WO 2015/044213 A1 (DSM IP ASSETS BV [NL]) 2 April 2015 (2015-04-02) * page 8, lines 1-5; claim 1; examples 4,5 * * page 11, lines 19-27 * | 1,2,4,5, 7-10,15 | TECHNICAL FIELDS SEARCHED (IPC) |
| A | WO 2009/135100 A1 (CADBURY ADAMS USA LLC [US]; ELEJALDE CESAR C [US]; JANI BHARAT [US]; E) 5 November 2009 (2009-11-05) * paragraphs [0001], [0024], [0072], [0085], [0086], [0250], [0350]; claims 1,14 * | 1-15 | A23L A23G |
| A | WO 2011/084760 A2 (KRAFT FOODS GLOBAL BRANDS LLC [US]; KENT GIDA MADDELERI SANAYII VE TIC) 14 July 2011 (2011-07-14) * paragraphs [0081], [0082]; claims 1,3,15,21; examples 1-4 * | 1-15 | |
| | -/-- | | |

The present search report has been drawn up for all claims

2

| Place of search | Date of completion of the search | Examiner |
|---|---|---|
| The Hague | 23 September 2015 | Tallgren, Antti |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 15 16 1103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2015/017605 A1 (MARS INC [US]) 5 February 2015 (2015-02-05) * paragraphs [0001], [0018] - [0020]; examples 1-3 * ----- | 1-15 | |
| A | WO 2014/179204 A1 (INTERCONTINENTAL GREAT BRANDS LLC [US]) 6 November 2014 (2014-11-06) * paragraph [0065]; claims 1,13-15; examples 3,11-15 * ----- | 1-15 | |

TECHNICAL FIELDS SEARCHED (IPC)

The present search report has been drawn up for all claims

2

| Place of search | Date of completion of the search | Examiner |
|---|---|---|
| The Hague | 23 September 2015 | Tallgren, Antti |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 15 16 1103

This annex lists the patent family members relating to the patent documents cited in the above-mentioned European search report. The members are as contained in the European Patent Office EDP file on
The European Patent Office is in no way liable for these particulars which are merely given for the purpose of information.

23-09-2015

| Patent document cited in search report | Publication date | Patent family member(s) | Publication date |
|---|---|---|---|
| US 2008113076 A1 | 15-05-2008 | AT 457654 T | 15-03-2010 |
| | | DE 202006010606 U1 | 22-11-2007 |
| | | EP 1875814 A1 | 09-01-2008 |
| | | US 2008113076 A1 | 15-05-2008 |
| | | WO 2008007195 A1 | 17-01-2008 |
| US 2013089644 A1 | 11-04-2013 | CA 2801270 A1 | 15-12-2011 |
| | | DE 102010023421 A1 | 15-12-2011 |
| | | EP 2579732 A1 | 17-04-2013 |
| | | US 2013089644 A1 | 11-04-2013 |
| | | WO 2011154407 A1 | 15-12-2011 |
| DE 202006003132 U1 | 12-07-2007 | AT 457653 T | 15-03-2010 |
| | | DE 202006003132 U1 | 12-07-2007 |
| | | DK 1825764 T3 | 10-05-2010 |
| | | EP 1825764 A1 | 29-08-2007 |
| WO 2015044212 A1 | 02-04-2015 | TW 201517811 A | 16-05-2015 |
| | | WO 2015044212 A1 | 02-04-2015 |
| WO 2015044213 A1 | 02-04-2015 | TW 201517812 A | 16-05-2015 |
| | | WO 2015044213 A1 | 02-04-2015 |
| WO 2009135100 A1 | 05-11-2009 | CN 102083321 A | 01-06-2011 |
| | | CN 102083322 A | 01-06-2011 |
| | | CN 102083323 A | 01-06-2011 |
| | | CN 102083324 A | 01-06-2011 |
| | | CN 102438461 A | 02-05-2012 |
| | | CN 102438462 A | 02-05-2012 |
| | | CN 104126723 A | 05-11-2014 |
| | | DE 09739928 T1 | 14-03-2013 |
| | | EP 2271225 A1 | 12-01-2011 |
| | | EP 2271226 A1 | 12-01-2011 |
| | | EP 2271227 A1 | 12-01-2011 |
| | | EP 2273890 A1 | 19-01-2011 |
| | | EP 2273891 A1 | 19-01-2011 |
| | | EP 2273892 A1 | 19-01-2011 |
| | | EP 2462813 A1 | 13-06-2012 |
| | | EP 2484220 A1 | 08-08-2012 |
| | | EP 2484221 A1 | 08-08-2012 |
| | | EP 2484222 A1 | 08-08-2012 |
| | | EP 2489277 A1 | 22-08-2012 |
| | | EP 2896297 A1 | 22-07-2015 |
| | | ES 2402130 T3 | 29-04-2013 |
| | | ES 2503545 T3 | 07-10-2014 |
| | | ES 2538224 T3 | 18-06-2015 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 15 16 1103

This annex lists the patent family members relating to the patent documents cited in the above-mentioned European search report. The members are as contained in the European Patent Office EDP file on
The European Patent Office is in no way liable for these particulars which are merely given for the purpose of information.

23-09-2015

| Patent document cited in search report | Publication date | Patent family member(s) | Publication date |
|---|---|---|---|
| | | JP 5462244 B2 | 02-04-2014 |
| | | JP 5702455 B2 | 15-04-2015 |
| | | JP 5715048 B2 | 07-05-2015 |
| | | JP 5715049 B2 | 07-05-2015 |
| | | JP 2011519563 A | 14-07-2011 |
| | | JP 2011519564 A | 14-07-2011 |
| | | JP 2011519565 A | 14-07-2011 |
| | | JP 2011519566 A | 14-07-2011 |
| | | JP 2013172744 A | 05-09-2013 |
| | | JP 2014050394 A | 20-03-2014 |
| | | JP 2014094018 A | 22-05-2014 |
| | | US 2011159143 A1 | 30-06-2011 |
| | | US 2011189376 A1 | 04-08-2011 |
| | | US 2011262588 A1 | 27-10-2011 |
| | | US 2011262620 A1 | 27-10-2011 |
| | | WO 2009135100 A1 | 05-11-2009 |
| | | WO 2009135101 A1 | 05-11-2009 |
| | | WO 2009135109 A1 | 05-11-2009 |
| | | WO 2009135126 A1 | 05-11-2009 |
| | | WO 2009135147 A1 | 05-11-2009 |
| | | WO 2009154887 A1 | 23-12-2009 |
| WO 2011084760 A2 | 14-07-2011 | EP 2515669 A2 | 31-10-2012 |
| | | US 2013052307 A1 | 28-02-2013 |
| | | WO 2011084760 A2 | 14-07-2011 |
| WO 2015017605 A1 | 05-02-2015 | NONE | |
| WO 2014179204 A1 | 06-11-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 077439 A
- EP 085763 A
- WO 2013144221 A


### Non-patent literature cited in the description


- **MERZLYAK et al.** *Photochem. Photobiol. Sci.,* 2005, vol. 4, 333-340
- Modified Starches: Properties and Uses. CRC Press, Inc, 1986